# EUROPEAN PATENT APPLICATION

(11) **EP 1 265 066 A2**
(43) Date of publication of application: **11.12.2002**
(21) Application number: 02445066.0
(22) Date of filing: 24.05.2002
(51) Int. Cl.: G01N 29/12

(54) **Method and device for quality control using frequency analysis**

(30) Priority: 31.05.2001 SE 0101984
(71) Applicant: Aktiebolaget SKF, S-415 50 Göteborg (SE)
(72) Inventor: Bankeström, Olle, 421 39 Va. Frölunda (SE); Gabrielsson, Göran, 429 42 Särö (SE); Göthberg, Anders, 443 38 Lerum (SE)
(74) Representative: Westman, Börje

(57) **Abstract**

A device (1), method and computer program product for indicating a function deviation of one or more details of manufacturing equipment using frequency component analysis for analysing deviations from a nominal product shape and an actual product shape using surface data (3) of a physical surface, the product having been processed by the manufacturing equipment, the analysis being based on the surface data (3) and a set of function deviation indicating frequencies corresponding to frequencies at which function deviations occur in the one or more details, the function deviation indicating frequencies being comprised in a frequency map (11). A method of configuring a frequency map is also disclosed.

## Description

### TECHNICAL FIELD

The present invention relates to a device, computer program product and method for indicating a function deviation of one or more details of manufacturing equipment using frequency component analysis for analysing deviations from a nominal product shape and an actual product shape using surface data of a physical surface describing the present product shape, the product having been processed by the manufacturing equipment. It also relates to a device for indicating the quality of a product processed by the manufacturing equipment.

The invention also relates to a method of configuring a frequency map comprising a set of function deviation indicating frequencies, the map being intended to be used in a device for indicating a function deviation of one or more details of a manufacturing equipment

### BACKGROUND OF INVENTION

A common way of obtaining indications of whether there are problems in manufacturing equipment is to use a vibration sensor to sense vibrations of the manufacturing equipment. A frequently used method of analysing the vibrations is based on the Fourier analysis.

In US 4,453,407, to Hitachi, a vibration diagnosis method and apparatus for rotary machines are presented. It is adapted for measuring the vibration of a rotor shaft of a rotary machine, extracting the vibration component synchronous with the revolution of the rotor shaft from the measured vibration data, comparing the amplitude of the extracted vibration component with the amplitude of the, analysing the causes of the synchronous vibration component when the result of the comparison meets a predetermined reference, judging, in accordance with the result of the analysis, whether the vibration due to mass unbalance is attributable to an abrupt generation of mass unbalance or to a thermal bow of the rotor shaft, and displaying the result of the judgement.

In 4,425,798, to Kawasaki Steel, an apparatus for diagnosing abnormalities in rotating machines is presented. It is intended to be used for the diagnosis of a rotary machinery equipment utilising a fast Fourier transform frequency spectrum analysis system. The presence or absence of an abnormality or trouble in the rotating machinery is determined by selecting high amplitudes out from the frequency spectrum computer by the FFT frequency spectrum analysis system, arithmetically processing distribution data of spectrum amplitudes adjacent each frequency giving the corresponding high amplitude, and detecting the amplitude, at which the frequency of vibrations of the rotating machinery has attained a maximum value, together with such a frequency.

In the fields of diagnosing and monitoring machinery equipment Fourier analysis has been used in inventions disclosed in DE 40 17 448 A1 and DE 40 32 299 A1.

Inventions of the kinds presented above are intended to be used to diagnose machinery equipment so that they do not malfunction and start to machine products of too low quality. A common feature of the inventions disclosed in the documents above is that the diagnosis is based on vibrations detected by sensors. There are a lot of vibrations in machinery equipment to be detected by these sensors. Not all of the vibrations that can be detected in a machinery equipment lead to products of too low quality. This means that there are vibrations in machinery equipment that do not jeopardise the quality of the product. Since not all vibrations impede the quality of the product there is a risk that the presence of harmless vibrations makes it difficult to detect harmful vibrations.

Thus, measuring vibrations using vibration sensors on machinery equipment leads to the disadvantage of having to deal with vibrations that do not effect the quality of the product being machined.

### SUMMARY OF THE INVENTION

The purpose of the present invention is to alleviate the disadvantage of the prior art. According to a first aspect of the present invention, the purpose is achieved by a device for indicating a function deviation of one or more details of manufacturing equipment using frequency component analysis. An example of a detail is pulley, which is arranged in manufacturing equipment. Other examples of details will be presented below. The frequency component analysis is used to analyse deviations from a nominal product shape and an actual product shape. The nominal product shape is the shape a product if it had been manufactured in a perfect machine with no limitations when it comes to precision. It can also be seen as the 'theoretical' shape. The present product shape is the shape the product actually has. This shape is likely to vary between products intended to have the same nominal shape. It can be seen as the 'practical' shape.

Analysing how the actual product shape of a product having been processed by the manufacturing equipment varies in relation to the nominal product shape is used as an indication of the state of the manufacturing equipment.

Surface data of a physical surface of the actual product shape describes the present product shape as it as been processed by the manufacturing equipment.

The surface data originates from an actual surface one of:
- a nominal rotational surface, and
- a nominal plane surface.

Analysing the product processed by the manufacturing equipment is preferred since only the frequencies that affect the actual product shape is detected. This means that vibrations not resulting in a change of the actual product shape do not impede the indication. Also, it is not necessary to test every product to see whether there are problems in the manufacturing equipment. It is sufficient to test only a fraction of the products processed by a the equipment. This means that the present invention does not have to be used on a continuous basis. Another advantage is that after a product having been manufactured it can be analysed. In prior art solutions this is not possible since the vibration data is normally not present at later times. This is based on that the Fourier analyses of the prior art is based on time directly, but in the present invention the Fourier analysis is based on a mark, a deviation, of the actual product shape. Thus there is a spatial aspect of the Fourier analysis as suggested in the present invention.

An example of details are details operating with frequencies, including overtones for rotating equipment within the manufacturing equipment, such as a rotary shaft, drive motor and belts. For instance a belt that has become worn will result in that the present invention will indicate that a function deviation has occurred provided that there will be an effect on the products manufactured by the manufacturing equipment. One feature of relevance here is relationships of revolutions of one detail and effects of these revolutions on other details within the manufacturing equipment.

The analysis is based on the surface data of the actual product shape and a set of function deviation indicating frequencies corresponding to frequencies at which function deviations occur in the one or more details. This leads to the advantage of being able to indicate a probable cause of the deviation in the actual product shape. The function deviation indicating frequencies are comprised in a frequency map.

The device comprises an input connection, a memory comprising the frequency map, a computational means, and an indicator means. The computational means is arranged to:
- receive the surface data via the input connection,
- perform a Fourier transformation of the surface data,
- indicate, using the indicator means, the correspondence between the frequency components of the surface data and the function deviation indicating frequencies of the frequency map. These steps are responsive for performing the actual indication of a function deviation.

According to one embodiment of the first aspect of the present invention the surface data corresponds to a line of the surface of the product, the line being in one of:
- a processing direction of the manufacturing equipment, and
- at least presenting a component in the processing direction of the manufacturing equipment.

Situations in which a line is in the processing direction can be found in for instance paper mills and rolling mills, in which paper and steel are manufactured in the processing direction. In some cases the line is not limited to being in the processing direction of the product. However, what is important is that the line comprises a vector component that covers the variation of the surface to be measured and analysed. Also that vector component must be able to be isolated. For instance, a line being sampled diagonally in relation to a processing direction over a nominal flat surface can be seen as comprising two vector components: one in the processing direction and one in perpendicular direction. Depending on what vector that is of interest the proper one will be chosen and subjected to Fourier transformation.

In one preferred embodiment the surface data is in the form of two-dimensional surface data of the physical surface to be analysed. In this case the computational means is further arranged to form one dimensional surface data from the two dimensional surface data, i.e. to select data forming a line of the surface. This offers the advantage that from a sample of a physical surface it is possible to form more than one line which results in increased opportunities of performing more than one frequency analysis using the present invention.

In another preferred embodiment the surface data is one dimensional and using the one dimensional Fourier transform, and in another preferred embodiment two dimensional using the two dimensional Fourier transform.

In another preferred embodiment the device is arranged to be one of portable and stationary. A portable device is preferred when performing on site analysis and a stationary device is preferred when used in a competence centre.

In another preferred embodiment the Fourier transformation is one of the fast and continuous types. Today, in the digital world, the fast Fourier analysis is preferred but it should be pointed out that the continuous Fourier transform can be employed to fully reach the potentials of the present invention. It should also be noted that the present invention can be accomplished by combining analogue and digital electronics. For instance, an specially designed electronic circuit may be employed to send an output signal to a computer screen for indicating presence of a function deviation.

In another preferred embodiment the computational means is a digital computer.

In another preferred embodiment the frequency map is comprised in a memory located at one location and the computational means is located at another location, and the memory and the computational means being interconnected by a computer network. This opportunity offers the advantage of having frequency maps at different levels:
1) A manufacturing unit
2) A set of manufacturing units of a plant
3) A set of manufacturing units of a company

The computer network offers an opportunity of analysing manufacturing units at a location distant from the memory. This is preferred when assessing the condition of manufacturing equipment.

In another preferred embodiment the input connection is arranged to a communication network. This facilitates the opportunity of obtaining surface data electronically. This is preferred since time is saved using this option. Also, this is preferred since this means that the analysis does not have to be performed on site. It can also be performed on an aggregate level.

In another preferred embodiment the input connection is arranged to a disk drive station of a computer. This facilitates the opportunity of obtaining surface data on a disk. This is preferred since this means that the analysis does not have to be performed on site.

An alternative use of the present invention is to use it to indicate the quality of the product. However this does not require the use of the frequency map but only the frequency components that indicate the physical surface of the actual product shape. This offers the advantage of obtaining information concerning the quality of the product.

The present invention can be used in different kinds of manufacturing equipment, for instance in manufacturing equipment for grinding, hot rolling, cold rolling, turning, milling, printing, polishing, and honing.

According to one embodiment the indicator means is constituted by a computer screen. Thus when a product having been machined by the manufacturing equipment the device indicates this using the computer screen.

According to one embodiment the indicator means is constituted by an alarm. Thus when a product having been machined by the manufacturing equipment the device indicates this by sending a alarm.

According to a second aspect of the present invention a method for indicating a function deviation of one or more details of manufacturing equipment using frequency component analysis. The method is performed by the device disclosed above and presented in claim 1 and 2. The method can be performed either on site or at a distant location for instance at so called competence centres.

According to a third aspect of the present invention, a computer program product is presented, which is loadable into the internal memory of a computer, comprising software code portions for performing the steps of claim 13, when run on a computer. This aspect facilitates the opportunity of using a general purpose computer, a PC, to perform the analysis. Distributing computer software today, can for instance be done by distributing a carrier, such as a CD-ROM, which one preferred embodiment of this aspect of the present invention, or an internet web-site on which it is possible to download the computer program product.

According to a fourth aspect of the present invention, a method for indicating a function deviation of one or more details of manufacturing equipment using frequency component analysis for analysing deviations from a nominal product shape and an actual product shape using surface data of a physical surface describing the present product shape, the product having been processed by the manufacturing equipment, the analysis being based on the surface data and a set of function deviation indicating frequencies corresponding to frequencies at which function deviations occur in the one or more details, the function deviation indicating frequencies being comprised in a frequency map, the method comprising the steps of:
- receiving the surface data,
- performing a Fourier transformation of the surface data,
- comparing frequency components of the surface data with the frequency map, and
- indicating in case a correspondence is detected between at least one frequency of the set of function deviation indicating frequencies of the frequency map and at least one frequency component of the surface data. An advantage of this aspect is that, in cases where the test frequency of products manufactured by the manufacturing equipment is low, the need of having an electronic device indicating manufacturing equipment status using a product manufactured by the manufacturing equipment is lower, perhaps even obsolete, since the actual indicating can be achieved using a lower level of electronic presence.

In one preferred embodiment the computational means is further arranged:
- to compare frequency components of the surface data with the function deviation indicating frequencies of the frequency map, and
- to indicate, using the indicator means, in case a correspondence is detected between at least one frequency of the set of function deviation indicating frequencies of the frequency map and at least one frequency component of the surface data. After indication the function deviation can be further examined and later alleviated so that the manufacturing equipment can go back to its normal working conditions.

In another preferred embodiment the correspondence is arranged to be based on the correlation between the frequency components of the surface data and the function deviation indicating frequencies of the frequency map. Thus a correlation exceeding a predetermined level leads to an indication that presence of a function deviation has occurred. By analysing what frequency component is responsive for the indication the function deviation can be found and alleviated.

According to a fourth aspect of the present invention a method of configuring a frequency map of a memory is disclosed. It comprises a set of function deviation indicating frequencies. The map is intended to be used in a device for indicating a function deviation of one or more details of a manufacturing equipment. The method comprises the steps of:
- investigating function deviation indicating frequencies occurring in the manufacturing equipment, and
- inputting the relevant function deviation indicating frequencies into the memory.

The investigation step comprises the following sub steps to be performed by an individual:
- scanning the manufacturing equipment for details that can produce function deviation indicating frequencies
- setting numeral values to the function deviation indicating frequencies of the details.

The information that is necessary to perform these steps can be found in for instance product manuals and maintenance manuals. Alternatively this information can be obtained by an on site investigation of the manufacturing equipment.

### BRIEF DESCRIPTION OF THE DRAWINGS

The invention will now be further described with reference to the following drawings.
Figure 1 schematically shows a device for indicating a function deviation of one or more details of manufacturing equipment using frequency component analysis
Figure 2 schematically presents a portion of a paper in a paper manufacturing process a or a sheet of iron at a rolling plant.
Figure 3 schematically indicates the waviness of the outer surface of a bearing ring. It should be noted that the waviness is emphasised in this Figure.
Figure 4 shows frequency components of a surface having been analysed.
Figure 5 shows a frequency map.
Figure 6 shows embodiments of the computer interface useful when configuring the frequency map.

### DESCRIPTION OF PREFERRED EMBODIMENTS

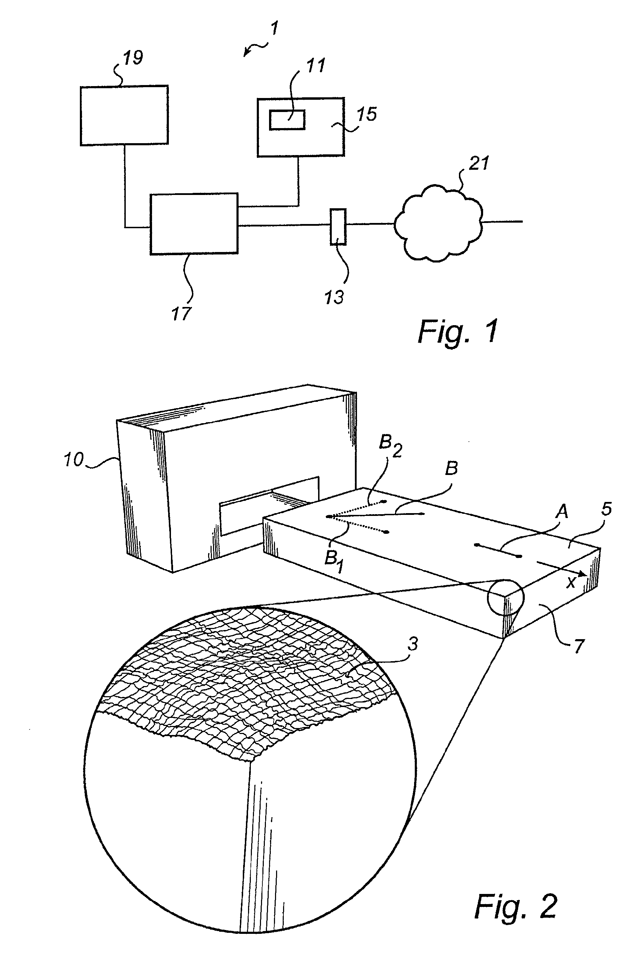

In Figure 1 a device 1 for indicating a function deviation of one or more details of manufacturing equipment is disclosed. The function of the device 1 is based on frequency component analysis for analysing deviations from a nominal product shape and an actual product shape. The input to the device 1 is surface data 3 of a physical surface 5 describing the present product shape.

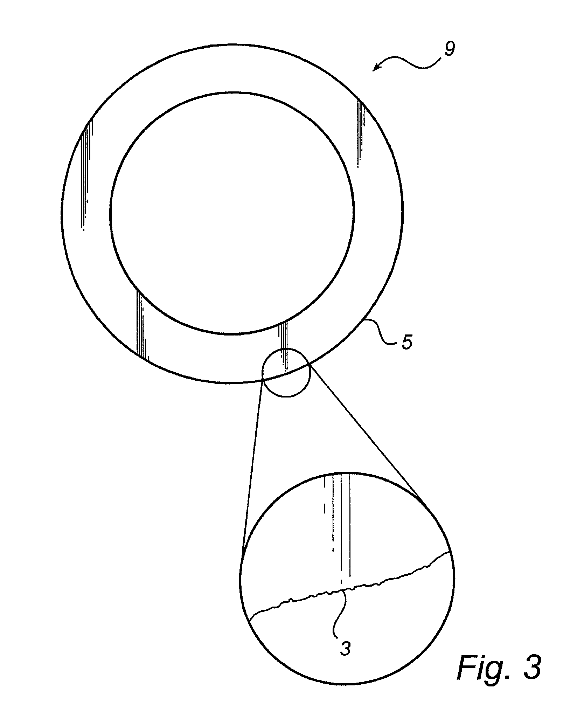

Examples of a physical surface 5 and physical surface data 3 is presented in Figures 2 and 3. One interpretation of the embodiment presented in Figure 2 is that the surface data 3 originates from a nominal plane surface, namely a sheet of iron 7. Another interpretation of the embodiment presented in Figure 3 is that the surface data 3 originates from a nominal rotational surface, namely a the outer surface of a bearing ring 9. Figure 3 schematically presents a bearing ring 9 of which the physical surface of the outside of the ring 9 presents a waviness. In Figure 3 the waviness is emphasised for clarity reasons.

A key notion is that a product having been processed by the manufacturing equipment 10 constitutes the foundation of the analysis since the analysis is based on the surface data 3 of the product 7, 9, as indicated by Figures 2 and 3. The surface data 3 is compared to a set of function deviation indicating frequencies. These frequencies correspond to frequencies at which function deviations occur in the one or more details. The function deviation indicating frequencies are comprised in a frequency map 11.

Details include details operating with frequencies, including overtones for rotating equipment within the manufacturing equipment 10, such as a rotary shaft, a pulley, a drive motor and belts. A key feature of relevance here is relationships of revolutions of one detail and effects of these revolutions on other details within the manufacturing equipment.

The device 1 comprises an input connection 13, a memory 15 comprising the frequency map 11, a computational means 17, which in a preferred embodiment is a digital computer, and an indicator means 19. The computational means 17 is arranged:
- to receive the surface data 3 via the input connection 13,
- to perform a Fourier transformation of the surface data 3,
- to compare frequency components of the surface data 3 with the function deviation indicating frequencies of the frequency map 11, and
- to indicate, using the indicator means 19, the correspondence between the frequency components of the surface data 3 and the function deviation indicating frequencies of the frequency map 11.

In case the waviness of the example surfaces presented in Figures 2 and 3 corresponds to a frequency of the frequency map 11, this is interpreted and indicated as a function deviation.

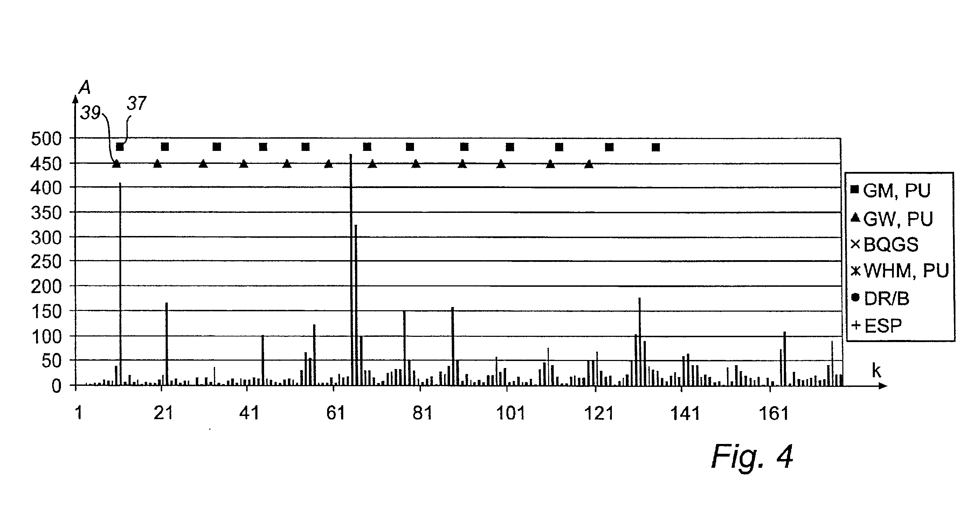

In a preferred embodiment the indication is as is presented as in Figure 4. From the information presented in Figure 4 a user can draw conclusions that the presence of function deviation affecting the product has occurred in the manufacturing equipment 11.

In an embodiment of the present invention the indicator means 19 is constituted by a computer screen.

In an alternative embodiment of the present invention the indicator means 19 is constituted by an alarm arranged for notification.

The surface data 3 corresponds to the data of the physical surface 5 forming a line of the surface of the product.

In one preferred embodiment the line A, presented in Figure 2, is in the processing direction X of the manufacturing equipment 10.

In another preferred embodiment the line at least presents a component in the processing direction X of the manufacturing equipment, as shown in Figure 2. The components of the line B presents the two components B₁ and B₂. The component B₁ is in the manufacturing process direction.

In a preferred embodiment the surface data 3 is one dimensional and the one dimensional fast Fourier transform is employed. However, in an alternative embodiment the surface data 3 of the product presented in Figure 2 may be two dimensional using the two dimensional Fourier transform. In yet another alternative embodiment the surface data 3 is in the form of two-dimensional surface data 5, and the computational means 17 is arranged to form one dimensional surface data, preferable in the form of a straight line, from the two dimensional surface data.

Figure 4 presents the indication of the condition of the manufacturing equipment 10 in terms of presence of function deviations. In Figure 4, the waviness amplitude, A, is presented in relation to the wave order, marked k. In Figure 4 the function deviation frequencies, are also presented. However, they are presented in the wave order form. The data in Figure 4 will be further discussed below. In the preferred embodiment presented in Figure 4 the indicator means 19 is constituted by a computer screen.

In a preferred embodiment the input connection 13 is arranged to a communication network 21. In a another preferred embodiment the input connection 13 is arranged to a disk drive station of a computer, which is not shown in Figure 1.

In a preferred embodiment the device is arranged to be portable.

According to the present invention a method of configuring a frequency map 11 of a memory 15 comprising a set of function deviation indicating frequencies, the memory 15 being comprised in a device 1 for indicating a function deviation of one or more details of manufacturing equipment using frequency component analysis for analysing deviations from a nominal product shape and an actual product shape using surface data 3 of a physical surface describing the present product shape, the product having been processed by the manufacturing equipment 10, the analysis being based on the surface data 3 and a set of function deviation indicating frequencies corresponding to frequencies at which function deviations occur in the one or more details. The method comprises the steps of:
- Investigating function deviation indicating frequencies occurring in the manufacturing equipment 10, and
- Inputting the relevant function deviation indicating frequencies into the memory 15.
   In preferred embodiment of the method for configuring the frequency map 11, the following steps are included.
- Scanning the manufacturing equipment 10 for details that can produce function deviation indicating frequencies, and
- Setting numeral values to the function deviation indicating frequencies of the details.

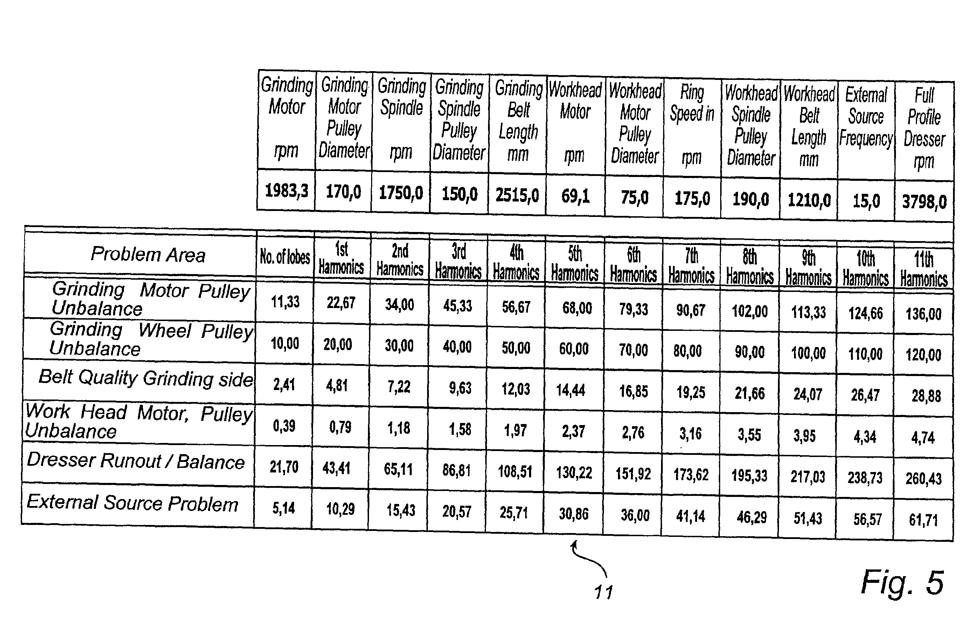

An example showing the procedure of configuring the frequency map 11 will now be given. In Figure 5 an embodiment of a frequency map 11 is presented. At the top there is a number of names of details presented in connection of numerical values of operating parameters, for instance 'Grinding motor (rpm)'. On left there is a number of problem areas presented, for instance 'Grinding motor, Pulley unbalance'. To the right of the problem areas of Figure 5, the function deviation frequencies, here in the form of number of lobes, of the details of manufacturing equipment 10 presented at the top of Figure 5 are presented for a specific application. Figure 5 also includes the harmonics, which are presented in relation to the number of lobes.

In a preferred embodiment of a specific relationships between operating parameters, e.g. 'Grinding motor', and different problem areas, e.g. 'Grinding motor, Pulley unbalance', are presented below in Table 1.

**Table 1**

| | |
|---|---|
| Problem area | Formula for calculating no. of lobes |
| Grinding motor, Pulley unbalance | (rpm of grinding motor)/(rpm of speed ring) |
| | |
| Grinding wheel, Pulley unbalance | (rpm of grinding spindle)/(rpm of ring speed) |
| | |
| Belt quality grinding side | (rpm of grinding motor)*(grinding motor pulley diameter)*PI/((grinding belt length)*(rpm of ring speed)) |
| | |
| Work head motor, Pulley unbalance | (rpm of work head motor)/rpm of ring speed) |
| Dresser run out/Balance | (rpm of full profile dresser)/(rpm of ring speed)) |
| | |
| External source problem | 60*(external source frequency)/(rpm of ring speed) |

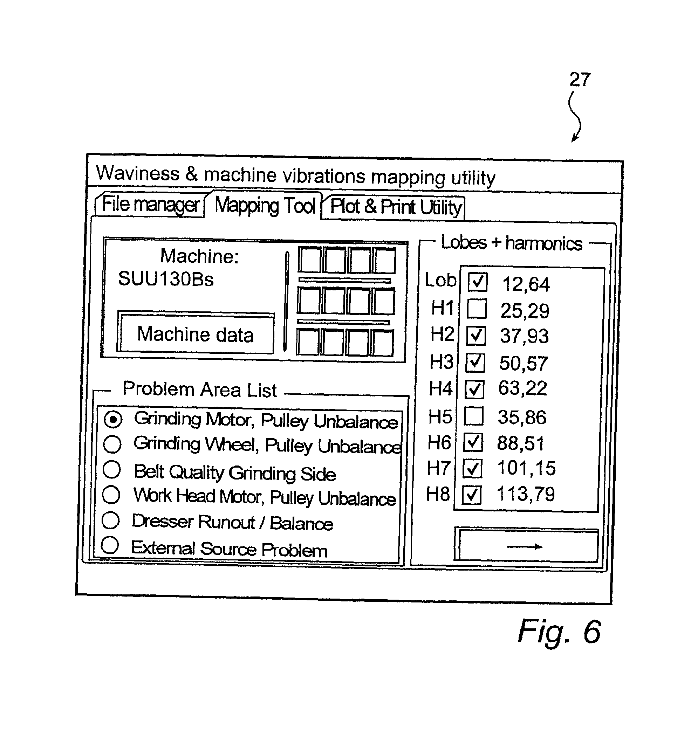

In Figure 6 an example of a computer interface 27 for managing the function deviation frequencies, lobes and harmonics, are presented. By clicking an item of the problem area list the function deviation frequencies, lobes and harmonics, are presented.

The numbers of lobes and their harmonics presented in Figure 5 are interpreted in Figure 4. In Figure 4 the nos. of lobes and overtones/harmonics indicating a function deviation problem areas presented in Figure 5 are illustrated abbreviated in the legend of Figure 4. Table 2 below presents the abbreviations and their problem area.

**Table 2**

| Problem area | Abbreviation |
|---|---|
| Grinding motor, Pulley unbalance | GM, PU |
| | |
| Grinding wheel, Pulley unbalance | GW, PU |
| | |
| Belt quality grinding side | BQGS |
| | |
| Work head motor, Pulley unbalance | WHM, PU |
| Dresser run out/Balance | DR/B |
| | |
| External source problem | ESP |

It should be noted that only the function deviation frequencies of the frequency map 11 related to 1) Grinding motor, Pulley unbalance and 2) Grinding wheel, Pulley unbalance are presented in Figure 4.

In Figure 4 the function deviation frequencies related to the problem area of Grinding Motor, Pulley Unbalance are indicated using a black box 37. All in all there are 12 black boxes 37 in relation to the k axis. The location of the black boxes 37 corresponds to the contents of Figure 5.

In Figure 4 the function deviation frequencies related to the problem area of Grinding Wheel, Pulley Unbalance are indicated using a black box 39. All in all there are 12 triangles. The location of the triangles 39 in relation to the k axis corresponds to the contents of Figure 5.

For clarity reasons related to Figure 4, the indications of other function deviation frequencies (Belt quality grinding side, Work head motor, Pulley unbalance, Dresser run out/Balance, and External source problem) are not included in Figure 4.

## Claims

1. A device (1) for indicating a function deviation of one or more details of manufacturing equipment using frequency component analysis for analysing deviations from a nominal product shape and an actual product shape using surface data (3) of a physical surface describing the present product shape, the product having been processed by the manufacturing equipment, the analysis being based on the surface data (3) and a set of function deviation indicating frequencies corresponding to frequencies at which function deviations occur in the one or more details, the function deviation indicating frequencies being comprised in a frequency map (11), the device (1) comprising: an input connection (13), a memory (15) comprising the frequency map (11), a computational means (17), and an indicator means (19), where the computational means (17) is arranged:
- to receive the surface data (3) via the input connection (13),
- to perform a Fourier transformation of the surface data (3),
- to indicate, using the indicator means (19), the correspondence between the frequency components of the surface data (3) and the function deviation indicating frequencies of the frequency map (11).

2. A device according to claim 1, in which the computational means (17) is further arranged:
- to compare frequency components of the surface data (3) with the function deviation indicating frequencies of the frequency map (11), and
- to indicate, using the indicator means (19), in case a correspondence is detected between at least one frequency of the set of function deviation indicating frequencies of the frequency map (11) and at least one frequency component of the surface data (3).

3. Device according to claim 2, wherein the indicator means (19) is constituted by an alarm.

4. Device according to claim 1, wherein the surface data (3) corresponds to a line of the surface of the product, the line being in one of:
- a processing direction (X) of the manufacturing equipment, and
- at least presenting a component in the processing direction (X) of the manufacturing equipment.

5. Device according to claim 1, wherein the surface data (3) is one of:
- one dimensional and using the one dimensional Fourier transform, and
- two dimensional using the two dimensional Fourier transform.

6. Device according to claim 1, wherein the surface data (3) is in the form of two-dimensional surface data of the physical surface, and the computational means (17) is further arranged:
- to form one dimensional surface data from the two dimensional surface data.

7. Device according to claim 1, wherein the surface data (3) originates from one of:
- a nominal rotational surface, and
- a nominal plane surface.

8. Device according to claim 1, wherein the indicator means (19) is constituted by a computer screen.

9. Device according to claim 1, wherein the input connection (13) is arranged to a communication network (21).

10. Device according to claim 1, wherein the input connection (13) is arranged to a disk drive station of a computer.

11. Use of the device according to claim 1 to indicate the quality of the product.

12. Device according to claim 1, wherein the manufacturing equipment is constituted by at least one of the equipment types for grinding, hot rolling, cold rolling, turning, milling, printing, polishing, and honing.

13. A method for indicating a function deviation of one or more details of manufacturing equipment using frequency component analysis for analysing deviations from a nominal product shape and an actual product shape using surface data (3) of a physical surface describing the present product shape, the product having been processed by the manufacturing equipment, the analysis being based on the surface data (3) and a set of function deviation indicating frequencies corresponding to frequencies at which function deviations occur in the one or more details, the function deviation indicating frequencies being comprised in a frequency map (11), the method being performed by a device comprising: an input connection (13), a memory (15) comprising the frequency map (11), a computational means (17), and an indicator means (19), the method comprising the steps of:
- receiving the surface data (3) via the input connection (13),
- performing a Fourier transformation of the surface data (3),
- indicating, using the indicator means (19), the correspondence between the frequency components of the surface data (3) and the frequency map (11).

14. Method according to claim 13, further comprising the steps of:
- comparing frequency components of the surface data (3) with the frequency map (11), and
- indicating in case a correspondence is detected between at least one frequency of the set of function deviation indicating frequencies of the frequency map (11) and at least one frequency component of the surface data (3).

15. A computer program product loadable into the internal memory of a computer, comprising software code portions for performing the steps of claim 13, when run on a computer.

16. A method of configuring a frequency map (11) of a memory (15) comprising a set of function deviation indicating frequencies, the memory (15) being comprised in a device (1) for indicating a function deviation of one or more details of manufacturing equipment using frequency component analysis for analysing deviations from a nominal product shape and an actual product shape using surface data of a physical surface describing the present product shape, the product having been processed by the manufacturing equipment, the analysis being based on the surface data (3) and a set of function deviation indicating frequencies corresponding to frequencies at which function deviations occur in the one or more details, the method comprising the steps of:
- investigating function deviation indicating frequencies occurring in the manufacturing equipment,
- inputting the relevant function deviation indicating frequencies into the memory (15).

17. Device according to claim 1, wherein the device (1) is arranged to be one of portable and stationary.

18. Device according to claim 1, wherein the computational means (17) is a digital computer.

19. Device according to claim 1, wherein the frequency map (11) is comprised in a memory (15) located at one location and the computational means ((17) is located at another location, the memory (15) and the computational means (17) being interconnected by a computer network.

20. Device according to claim 1, wherein the correspondence is arranged to be based on the correlation between the frequency components of the surface data (3) and the function deviation indicating frequencies of the frequency map (11).

21. A carrier comprising the computer program product in claim 15.

22. A method for indicating a function deviation of one or more details of manufacturing equipment using frequency component analysis for analysing deviations from a nominal product shape and an actual product shape using surface data of a physical surface describing the present product shape, the product having been processed by the manufacturing equipment, the analysis being based on the surface data and a set of function deviation indicating frequencies corresponding to frequencies at which function deviations occur in the one or more details, the function deviation indicating frequencies being comprised in a frequency map, the method comprising the steps of:
- receiving the surface data,
- performing a Fourier transformation of the surface data,
- comparing frequency components of the surface data with the frequency map, and
- indicating in case a correspondence is detected between at least one frequency of the set of function deviation indicating frequencies of the frequency map and at least one frequency component of the surface data.
